# EUROPEAN PATENT APPLICATION

(11) **EP 2 706 527 A2**
(43) Date of publication of application: **12.03.2014**
(21) Application number: 13178758.2
(22) Date of filing: 31.07.2013
(51) Int. Cl.: G09G 5/10

(54) **Display apparatus and control method thereof**

(30) Priority: 10.09.2012 KR 20120099841
(71) Applicant: Samsung Electronics Co., Ltd, Gyeonggi-do 443-742 (KR)
(72) Inventor: Na, Hong-ju, Gyeonggi-do (KR)
(74) Representative: Walaski, Jan Filip

(57) **Abstract**

A display apparatus and a control method thereof which minimizes power consumed for driving a display unit includes a display unit which displays an image thereon, an image processor which processes an input image signal to display an image on the display unit, and a controller which determines a peripheral area which is an outer part of a main viewing area of the image for a user, and controls the image processor to display the image by reducing a brightness of the input image signal with respect to the peripheral area.

## Description

The present invention relates to a display apparatus and a control method thereof, and more particularly, to a display apparatus and a control method thereof which displays an image based on an image signal.

A display apparatus such as a TV or a monitor displays an image based on an image signal. The display apparatus includes a display unit displaying an image thereon, and power is consumed to drive the display unit. Thus, it is preferable to minimize the power consumed for driving the display unit. Also, it is required to minimize the effect of the reduced power consumption on the quality of the image.

Additional aspects and/or advantages of one or more embodiments will be set forth in part in the description which follows and, in part, will be apparent from the description, or may be learned by practice of one or more embodiments of disclosure. One or more embodiments are inclusive of such additional aspects.

Accordingly, one or more exemplary embodiments provide a display apparatus and a control method thereof which may reduce power consumed for driving a display unit.

One or more exemplary embodiments provide a display apparatus and a control method thereof which may reduce power consumed for driving a display unit while possibly reducing the effect to the quality of an image.

The foregoing described problems may be overcome and/or other aspects may be achieved by one or more embodiments of a display apparatus which may include a display unit which may display an image thereon, an image processor which may process an input image signal to display an image on the display unit, and a controller which may determine a peripheral area which is an outer part of a main viewing area of the image for a user, and may control the image processor to display the image by reducing a brightness of the input image signal with respect to the peripheral area.

The controller may determine the peripheral area based on a distance from a centre of the image.

The controller may reduce the brightness of the peripheral area if a motion of the image in the peripheral area is a predetermined value or more.

The controller may determine a quantity of reducing the brightness of the peripheral area based on a distance from a centre of the image.

The controller may gradually reduce the brightness of the peripheral area over a predetermined time.

The display unit may include, for example, one of a plasma display panel (PDP) and an organic light emitting diode (OLED) panel.

The foregoing described problems may be overcome and/or other aspects may be achieved by one or more embodiments of a control method of a display apparatus which may display an image based on an image signal which may include: determining a peripheral area which is an outer part of a user's main viewing area in the image; and displaying the image by reducing a brightness of the input image signal, with respect to the peripheral area.

The determining the peripheral area may include determining the peripheral area based on a distance from a centre of the image.

The displaying the image by reducing the brightness may include reducing the brightness of the peripheral area if a motion of the image in the peripheral area is a predetermined value or more.

The displaying the image by reducing the brightness may include determining a quantity of reducing the brightness of the peripheral area based on the distance from the centre of the image.

The displaying the image by reducing the brightness may include gradually reducing the brightness of the peripheral area over a predetermined time.

The display apparatus may include, for example, one of a PDP and an OLED panel to display the image.

The above and/or other aspects will become apparent and more readily appreciated from the following description of exemplary embodiments, taken in conjunction with the accompanying drawings, in which:
FIG. 1 is a block diagram of a display apparatus according to one or more embodiments;
FIG. 2 is a flowchart showing a control method of the display apparatus according to one or more embodiments;
FIG. 3 illustrates an example of a main viewing area and a peripheral area according to one or more embodiments;
FIG. 4 is a flowchart showing a control method of the display apparatus according to one or more embodiments; and
FIG. 5 illustrates the degree of reducing brightness according to one or more embodiments.

Reference will now be made in detail to one or more embodiments, illustrated in the accompanying drawings, wherein like reference numerals refer to like elements throughout. In this regard, embodiments of the present invention may be embodied in many different forms and should not be construed as being limited to embodiments set forth herein, as various changes, modifications, and equivalents of the systems, apparatuses and/or methods described herein will be understood to be included in the invention by those of ordinary skill in the art after embodiments discussed herein are understood. Accordingly, embodiments are merely described below, by referring to the figures, to explain aspects of the present invention.

Hereinafter, one or more embodiments will be described in detail.

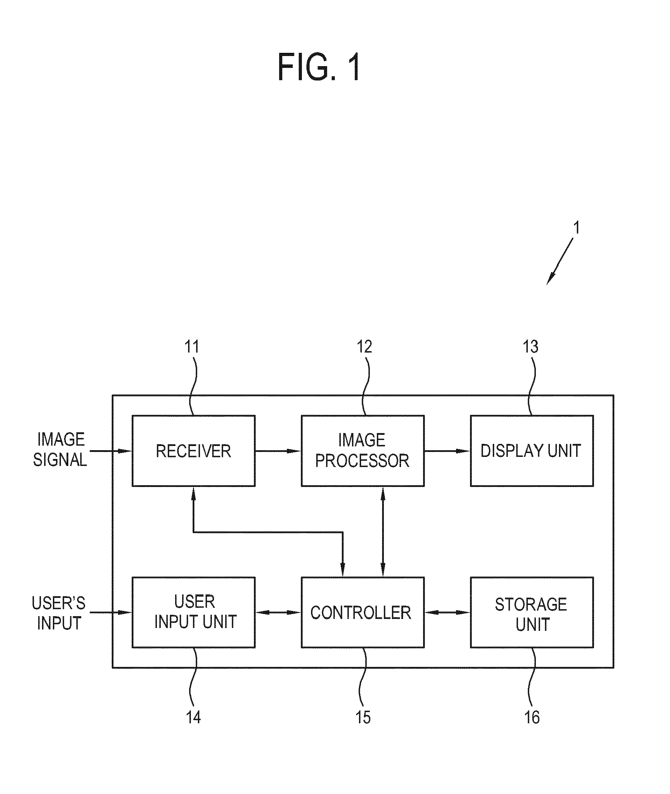

FIG. 1 is a block diagram of a display apparatus according to one or more embodiments. The display apparatus 1 may include a receiver 11, an image processor 12, a display unit 13, a user input unit 14, a controller 15 and a storage unit 16. The receiver 11 may receive an image signal. The receiver 11 may receive, for example, a broadcasting signal as an image signal from a transmission apparatus (not shown) of a broadcasting signal such as a TV broadcasting signal, an image signal from an image device such as a DVD player or a BD player, an image signal from a PC, an image signal from a mobile device such as a smart phone or a smart pad, an image signal from a network such as the Internet, or receive an image content as an image signal stored in a storage medium such as a universal serial bus (USB) storage medium.

The image processor 12 may process an image signal received by the receiver 11 to display an image. The display unit 13 may display an image thereon based on the image signal processed by the image processor 12. The display type of the display unit 13 may include, for example, but is not limited to, a plasma display panel (PDP), an organic light emitting diode (OLED), etc. In this case, the display unit 13 may include, for example, a PDP or an OLED panel, etc.

The user input unit 14 may receive a user's input. The user input unit 14 may include, for example, a remote control signal receiver which may receive a remote control signal including a user's input from a remote controller and a manipulation button or a touch panel to receive a user's input directly, etc.

The storage unit 16 may include a volatile or non-volatile memory such as, for example, a flash memory, a hard disc drive, etc. The storage unit 16 may store therein programs and data necessary for operations of the display apparatus 1. Such programs may include, for example, an operating system (OS), an application program, etc.

The controller 15 may determine a peripheral area as an outer area of a user's main viewing area, and may control the image processor 12 to display an image by reducing a brightness of an input image signal with respect to the peripheral area in an image displayed on the display unit 13. A detailed operation of the controller 15 will be described later.

The controller 15 may include a non-volatile memory (not shown) storing therein a control program for performing the control operation, a volatile memory (not shown) loading at least a part of the stored control program and a microprocessor (not shown) executing the loaded control program.

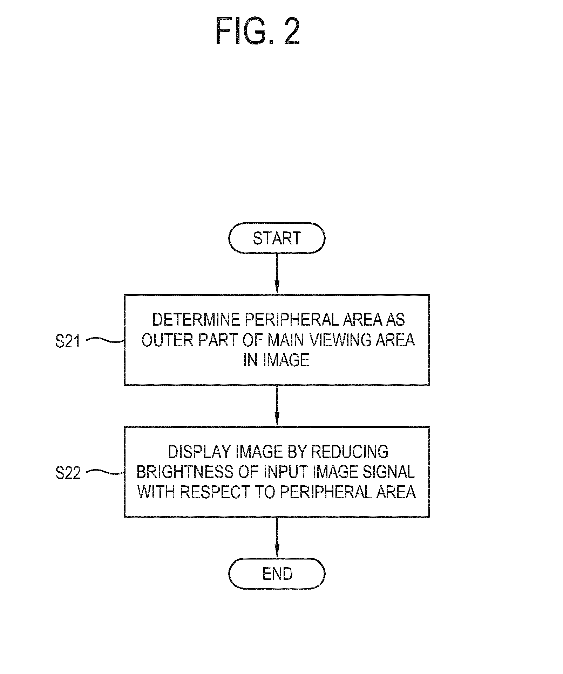

FIG. 2 is a flowchart showing a control method of a display apparatus according to one or more embodiments, such as the display apparatus 1 in FIG. 1. At operation S21, the controller 15 of the display apparatus 1 may determine a peripheral area as an outer part of a user's main viewing area in an image displayed on the display unit 13. The controller 15 may determine the peripheral area based on a distance from a center of the image.

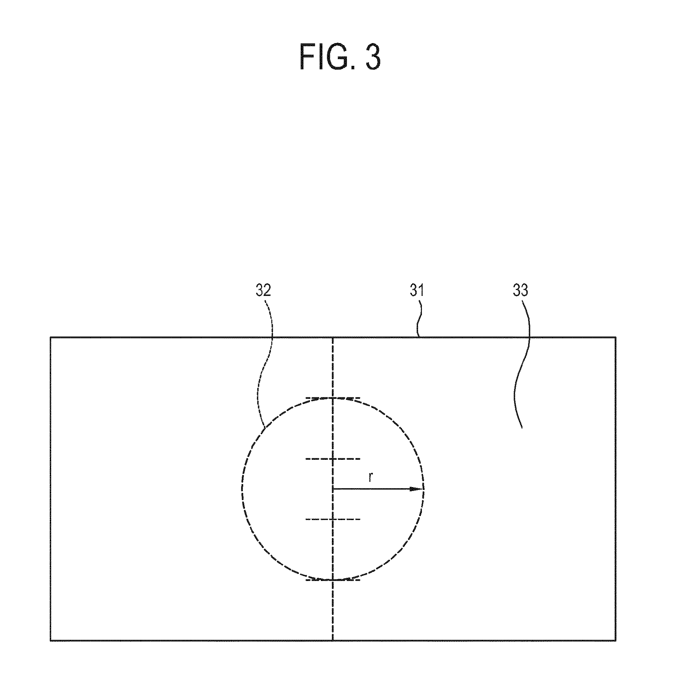

FIG. 3 illustrates an example of the main viewing area and the peripheral area according to one or more embodiments. As shown therein, a main viewing area 32 may have a predetermined size in a screen 31 of the display unit 13. For example, the main viewing area 32 may be located in a centre of the screen 31 and have a circular shape with a predetermined radius r. The peripheral area 33 may be an area excluding the main viewing area 32 in the screen 31. The definition of the main viewing area 32 and the peripheral area 33 may be based on the phenomenon that a typical user focuses on only a central part of the screen 31 and does not pay attention to the remaining part thereof when viewing an image. For example, the radius r of the main viewing area 32 may fall under 3/5 of the vertical length of the screen 31. However, the size and location of the main viewing area 32 are not limited to those shown in FIG. 3, and is subject to change depending on design.

Information regarding the size and location of the main viewing area 32 may be stored in the storage unit 16. The controller 15 may refer to the information stored in the storage unit 16 and may determine whether the part of the image to be processed falls under the main viewing area 32 or the peripheral area 33.

At operation S22, the controller 15 may control the image processor 12 to display an image by reducing a brightness of an input image signal, with respect to the peripheral area 33. That is, the controller 15 may reduce the brightness of the peripheral area 33 which is given less attention from a user, leaving the main viewing area 32 which is given focus from a user as is, out of the entire area of the screen 31. Then, the controller 15 may reduce the brightness of the peripheral area 33 to reduce power consumption for driving the display unit 13. As the area in which the brightness of the image is reduced may not be the main viewing area 32 on which a user focuses for viewing, but the peripheral area 33 on which a user gives less focus, a user may not recognize the reduced brightness of the peripheral area 33, and the effect of the reduced brightness to the image quality may be reduced.

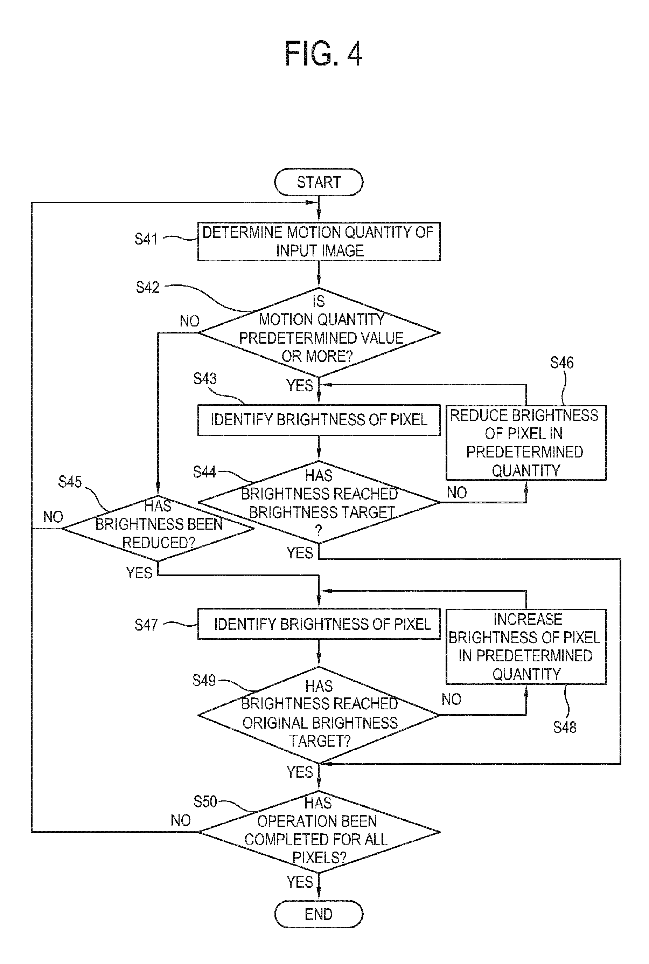

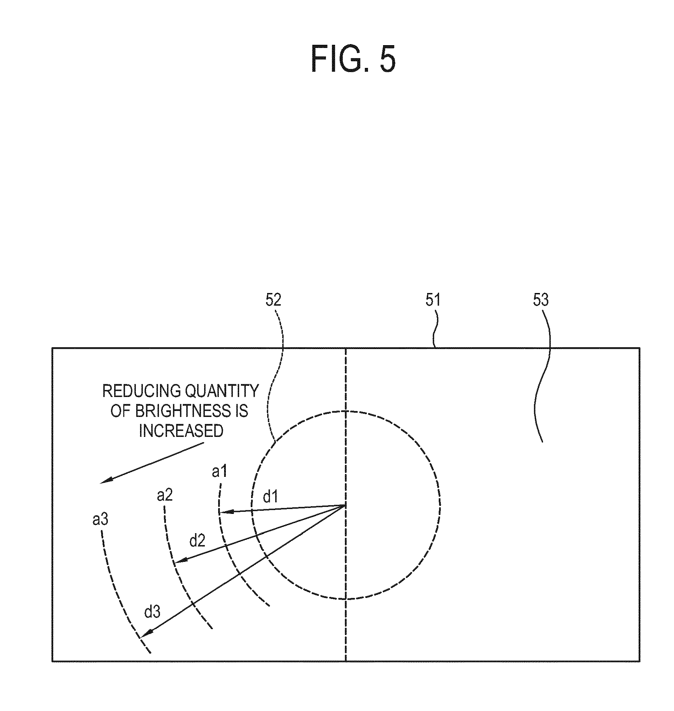

Referring to FIGS. 4 and 5, the display apparatus 1 according to one or more embodiments will be described in more detail. FIG. 4 is another example of a flowchart showing the operation of the display apparatus 1 according to one or more embodiments. In one or more embodiments, a detailed operation for reducing the brightness of the peripheral area 33 will be described. The operation may be performed pixel by pixel in a frame. At operation S41, the controller 15 may determine a motion quantity of an input image. The determination of the motion quantity may be based on a change in the corresponding part of the image between a current frame and a previous frame. The determination of the motion quantity may be performed, for example five or more times repeatedly. For example, the controller 15 may reduce the brightness of the peripheral area 33 only when a motion of an image such as a video is a predetermined value or more. Thus, a user may not recognize the reduced brightness, and the deterioration of image quality due to the reduced brightness may be reduced.

At operation S42, the controller 15 may identify a brightness of a pixel of the image if a motion quantity of the image is a predetermined value or more (S43). As a result, at operation S44, the controller 15 may perform the operation S50 if the brightness of the pixel has reached a brightness reducing target. If the brightness of the pixel has not reached the brightness reducing target, the controller 15 may control the image processor 12 to reduce the brightness of the pixel for a predetermined amount at operation S46. The degree of reducing the brightness, i.e., the brightness reducing target may be determined to be approximately 60% of the original pixel brightness, for example. The controller 15 may gradually reduce the brightness of the pixel over a predetermined time. That is, the speed of reducing the brightness, for example, may be approximately one second in which the brightness reaches the target. At operation S46, if the pixel brightness has been reduced as desired, the operation S43 is performed again.

Referring to the operation S42, if the motion quantity of the image is a predetermined value or more, the controller 15 may identify whether the brightness of the pixel has been reduced to restore the reduced brightness to the original state at operation S45. That is, the controller 15 may identify whether the brightness reducing operation at operation S46 has been performed on the pixel. If it is identified that the brightness of the pixel has been reduced, the controller 15 may identify a current brightness of the pixel at operation S47. At operation S49, if the brightness of the pixel has reached the original brightness target of the pixel, the controller 15 may perform the operation S50. If the brightness of the pixel has not reached the original brightness target of the pixel, the controller 15 may control the image processor 12 to increase the brightness of the pixel by a predetermined quantity at operation S48. The speed of increasing the brightness of the pixel may be identical to the speed of reducing the brightness of the pixel. If the brightness of the pixel has been increased at operation S48, the operation S47 may be performed again.

Returning to the operation S45, if it is determined that the brightness of the pixel has not been reduced, the controller 15 may perform the operation S41 again. At operation S50, the controller 15 may identify whether the operation has been completed with respect to all pixels, and if not, the controller 15 may perform the operation S41 again. The controller 15 may determine the reducing quantity of the brightness of the peripheral area based on a distance from a centre of the image. FIG. 5 illustrates the degree of reducing the brightness according to one or more embodiments. As shown therein, the quantity of reducing the brightness of a peripheral area 53 may be increased in proportion to how far the peripheral area 53 is from the centre of the screen 51. That is, the closer the peripheral area 53 is to the main viewing area 52, the less the quantity of reducing the brightness of the peripheral area 53 may be. For example, the quantity of reducing brightness of three parts a1, a2 and a3 of the peripheral area 53 to which the distances from the centre of the screen 51 are d1, d2 and d3, respectively, may be different. For example, brightness of the first peripheral area a1 may be 90% of the original brightness of the image, the brightness of the second peripheral area a2 may be 80% thereof, and the brightness of the third peripheral area a3 may be 70% thereof.

As described above, a display apparatus and a control thereof may reduce power consumed for driving a display unit while reducing the effect on an image quality.

In one or more embodiments, any apparatus, system, element, or interpretable unit descriptions herein include one or more hardware devices or hardware processing elements. For example, in one or more embodiments, any described apparatus, system, element, retriever, pre or post-processing elements, tracker, detector, encoder, decoder, etc., may further include one or more memories and/or processing elements, and any hardware input/output transmission devices, or represent operating portions/aspects of one or more respective processing elements or devices. Further, the term apparatus should be considered synonymous with elements of a physical system, not limited to a single device or enclosure or all described elements embodied in single respective enclosures in all embodiments, but rather, depending on embodiment, is open to being embodied together or separately in differing enclosures and/or locations through differing hardware elements.

In addition to the above described embodiments, embodiments can also be implemented through computer readable code/instructions in/on a non-transitory medium, e.g., a computer readable medium, to control at least one processing device, such as a processor or computer, to implement any above described embodiment. The medium can correspond to any defined, measurable, and tangible structure permitting the storing and/or transmission of the computer readable code.

The media may also include, e.g., in combination with the computer readable code, data files, data structures, and the like. One or more embodiments of computer-readable media include: magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Computer readable code may include both machine code, such as produced by a compiler, and files containing higher level code that may be executed by the computer using an interpreter, for example. The media may also be any defined, measurable, and tangible distributed network, so that the computer readable code is stored and executed in a distributed fashion. Still further, as only an example, the processing element could include a processor or a computer processor, and processing elements may be distributed and/or included in a single device.

The computer-readable media may also be embodied in at least one application specific integrated circuit (ASIC) or Field Programmable Gate Array (FPGA), as only examples, which execute (e.g., processes like a processor) program instructions.

While aspects of the present invention has been particularly shown and described with reference to differing embodiments thereof, it should be understood that these embodiments should be considered in a descriptive sense only and not for purposes of limitation. Descriptions of features or aspects within each embodiment should typically be considered as available for other similar features or aspects in the remaining embodiments. Suitable results may equally be achieved if the described techniques are performed in a different order and/or if components in a described system, architecture, device, or circuit are combined in a different manner and/or replaced or supplemented by other components or their equivalents.

Thus, although a few embodiments have been shown and described, with additional embodiments being equally available, it would be appreciated by those skilled in the art that changes may be made in these embodiments without departing from the principles of the invention, the scope of which is defined in the claims.

## Claims

1. A display apparatus comprising:
a display unit which displays an image thereon;
an image processor which processes an input image signal to display an image on the display unit; and
a controller which determines, using one or more processors, a peripheral area of the display unit which is an outer part of a main viewing area of the display unit, and controls the image processor to display the image by reducing a brightness of the displayed image with respect to the peripheral area.

2. The display apparatus according to claim 1, wherein the controller determines the peripheral area based on a distance from a centre of the image.

3. The display apparatus according to claim 1 or 2, wherein the controller reduces the brightness of the peripheral area if a motion of the image in the peripheral area is a predetermined value or more.

4. The display apparatus according to any preceding claim, wherein the controller determines a quantity of reducing the brightness of the peripheral area based on a distance from a centre of the image.

5. The display apparatus according to any preceding claim, wherein the controller reduces the brightness of the peripheral area over a predetermined time.

6. The display apparatus according to any preceding claim, wherein the display unit comprises one of a plasma display panel PDP and an organic light emitting diode OLED panel.

7. A control method for a display apparatus which displays an image based on an image signal comprising:
determining a peripheral area which is an outer part of a main viewing area in the image; and
displaying the image by reducing a brightness of the input image signal, with respect to the peripheral area.

8. The control method according to claim 7, wherein the determining the peripheral area comprises determining the peripheral area based on a distance from a centre of the image.

9. The control method according to claim 7 or 8, wherein the displaying the image by reducing the brightness comprises reducing the brightness of the peripheral area if a motion of the image in the peripheral area is a predetermined value or more.

10. The control method according to one of claims 7 to 9, wherein the displaying the image by reducing the brightness comprises determining a quantity of reducing the brightness of the peripheral area based on the distance from the centre of the image.

11. The control method according to one of claims 7 to 10, wherein the displaying the image by reducing the brightness comprises reducing the brightness of the peripheral area over a predetermined time.

12. The control method according to one of claims 7 to 11, wherein the display apparatus comprises one of a PDP and an OLED panel to display the image.
